# EUROPÄISCHE PATENTSCHRIFT

(11) **EP 1 899 201 B1**
(45) Veröffentlichungstag und Bekanntmachung des Hinweises auf die Patenterteilung: **18.12.2013**
(21) Anmeldenummer: 06762380.1
(22) Anmeldetag: 04.07.2006
(51) Int. Cl.: B60R 21/231, B60R 21/013, B60R 21/207, B60R 21/0134, B60R 21/232, B60R 21/00

(54) **SEITENGASSACK-EINHEIT FÜR EIN KRAFTFAHRZEUG**
SIDE AIRBAG UNIT FOR A MOTOR VEHICLE
MODULE DE COUSSIN GONFLABLE LATERAL POUR UN VEHICULE AUTOMOBILE

(30) Priorität: 06.07.2005 DE 102005031545
(43) Veröffentlichungstag der Anmeldung: 19.03.2008
(73) Patentinhaber: AUTOLIV DEVELOPMENT AB, 447 83 Vargarda (SE)
(72) Erfinder: CHARPENTIER, Frederic, 60390 Le Vauroux (FR); GARRET, Gilles, F-76000 Rouen (FR)
(74) Vertreter: Schön, Thilo
(86) Internationale Anmeldenummer: PCT/EP2006/006488
(87) Internationale Veröffentlichungsnummer: WO 2007/003406

(56) Entgegenhaltungen:
- DE-A1- 10 331 212
- DE-A1- 19 640 322
- US-A1- 2002 166 710

## Beschreibung

### Technisches Gebiet der Erfindung

Die Erfindung betrifft eine Seitengassack-Einheit nach dem Oberbegriff des Anspruchs 1.

In der Technik sind sogenannte Seitengassack-Einheiten bekannt. Diese dienen dazu, den Fahrzeuginsassen bei einem Seitencrash zu schützen. Gasgenerator und Seitengassack einer solchen Seitengassack-Einheit sind in oder an der Rückenlehne des jeweiligen Sitzes oder in der Seitenstruktur des Kraftfahrzeugs angeordnet. Im Bedarfsfall, d.h. dann, wenn ein Aufprall eines Objekts auf die Seitenwand des Kraftfahrzeugs detektiert wird, wird der Seitengassack zwischen Insassen und seitlicher Innenstruktur des Kraftfahrzeuges aufgeblasen.

### Stand der Technik

Aus der WO 2005/016703 A1 ist eine Seitengassack-Einheit bekannt, bei der mehrere Sensoren Informationen an eine Steuerungseinheit liefern und die Steuerungseinheit in Abhängigkeit von den ihr gelieferten Informationen den Gasgenerator unterschiedlich ansteuert, um hinsichtlich des zu schützenden Insassen und hinsichtlich der Art des Unfalls einen optimalen Schutz zu erzielen. Hierbei wird auch vorgeschlagen, einen Näherungssensor vorzusehen, mit dessen Hilfe die Geschwindigkeit und Größe (und damit näherungsweise die Masse) des auftreffenden Objekts näherungsweise vorausberechnet werden.

Aus der gattungsbildenden US 2002/016670 A1 ist es bekannt, einen Näherungssensor vorzusehen und aufgrund dieses Näherungssensors den Gasgenerator eines Gassacks schon vor dem eigentlichen Unfallereignis, also insbesondere vor Auftreffen eines fremden Fahrzeuges, zu zünden. Unter anderem wird vorgeschlagen, aufgrund des Signals des Näherungssensors einen Seitengassack zu betätigen, welcher den zugeordneten Insassen ins Innere des Kraftfahrzeuges drückt. Aufgrund des Signals eines Aufprallsensors wird zu einem späteren Zeitpunkt ein weiterer Gassack, insbesondere ein Vorganggassack mit Gas befüllt, welcher dann die eigentliche Schutzfunktion übernimmt. Man benötigt also zwei voneinander unabhängige Gassäcke, um die gewünschte Wirkung zu erreichen.

In der DE 196 40 322 A1 ist ein Frontgassack beschrieben. Hier ist eine Ventilationsöffnung zu einem frühen Zeitpunkt der Expansion des Gassackes offen. Es ist ein Verschlussmechanismus vorgesehen, der diese Ventilationsöffnung offen hält, falls der Gassack während der Expansion auf ein Hindernis, insbesondere einen Insassen, trifft. Dies trägt zum Schutz eines sich nicht in einer Standardposition befindenden Insassen bei. Expandiert der Gassack vollständig, so wird diese Ventilationsöffnung geschlossen und bleibt auch bei Auftreffen des Insassen geschlossen.

### Gegenstand der Erfindung

Ausgehend von diesem Stand der Technik ist es Aufgabe der Erfindung, eine gattungsgemäße Seitengassack-Einheit dahingehend weiterzubilden, dass der Schutz des Insassen weiter verbessert wird.

Die erfindungsgemäße Seitengassack-Einheit weist einen mit der Steuerungseinheit verbundenen Näherungssensor auf. Das Signal des Näherungssensors wird dazu verwendet, dass der Gasgenerator schon eine gewisse Zeit vor Auftreffen eines relevanten Objektes auf die seitliche Außenwand des Kraftfahrzeugs betätigt wird. Unter einem relevanten Objekt wird hier ein solches verstanden, dessen Größe und Geschwindigkeit so hoch sind, dass die Auslösung des Seitengassacks sinnvoll ist.

Durch diese Maßnahme verbleibt mehr Zeit, um den Seitengassack vollständig mit Gas zu füllen. Ein vollständig befüllter Gassack ist notwendig, um seine maximale Schutzwirkung bereitzustellen. Durch die Zündung des Gasgenerators vor dem seitlichen Aufprall des Objekts - meist ein anderes Fahrzeug - ergeben sich verschiedene Vorteile: Zum einen wird die Wahrscheinlichkeit erhöht, dass auch bei einem sehr schweren Seitenunfall der Seitengassack rechtzeitig vollständig befüllt ist. Weiterhin besteht die Möglichkeit, eine Seitengassack mit einem größeren Volumen zu verwenden und/oder die Leistung des Gasgenerators zu verringern. Eine Verringerung der Gasgeneratorleistung führt zu einer geringeren Expansionsgeschwindigkeit des Seitengassacks, wodurch die Belastung eines sich nicht in Standard-Sitzposition befindenden Insassen durch den Seitengassack selbst vermindert wird. Ob man von der Möglichkeit, die Leistung des Gasgenerators zu vermindern, Gebrauch machen möchte, hängt in erster Linie von den geometrischen Verhältnissen innerhalb des Kraftfahrzeugs ab.

Da der Seitengassack schon vor dem eigentlichen Unfall befüllt wird, muss sein Innendruck länger aufrechterhalten werden, um Ober die Gesamtdauer des Unfalls seine Schutzwirkung zur Verfügung zu stellen. Der Seitengassack ist deshalb wie folgt ausgestaltet: Die Ventilationsöffnung des Seitengassacks, welche notwendig ist, um dem Seitengassack bei Eintauchen des Insassen seine notwendige Weichheit zu verleihen, ist mit einem Verschlusselement verschließbar. Dieses wiederum ist mit einem Betätigungselement verbunden, welches das Verschlusselement erst dann in eine offene Stellung bringt, wenn von außen Druck auf die Prallfläche des Seitengassacks ausgeübt wird. Hierdurch ist der Gassack bis zu dem Zeitpunkt, zu dem der Insasse auf die Prallfläche auftrifft, im wesentlichen gasdicht, wodurch der Umstand, dass er seinen Innendruck über einen längeren Zeitraum halten muss, kompensiert wird.

Eine bevorzugte Ausführungsform einer solchen Seitengassack-Einheit mit eine verschließbaren Ventilationsöffnung ist in Anspruch 4 angegeben.

Um zu verhindem, dass die Seitengassack-Einheit bei einer Fehlfunktion des Näherungssensors vollständig funktionslos wird, ist vorzugsweise ein zweiter Sensor vorhanden, der als konventioneller Seitencrash-Sensor ausgebildet ist. Dieser dient als backup-Sensor und bewirkt eine Betätigung des Seitengassackes dann, wenn er einen Seitencrash detektiert und der Gasgenerator nicht schon zuvor betätigt wurde.

Unter Seitengassack wird hier jeder Gassack verstanden, der sich zwischen Seitenstruktur des Kraftfahrzeugs und einem oder mehreren Insassen aufbläst, insbesondere also auch ein sogenannter Vorhang-Gassack (Curtain Airbag).

Weitere bevorzugte Ausführungsformen ergeben sich aus den weiteren Unteransprüchen sowie aus dem nun mit Bezug auf die Figuren näher dargestellten Ausführungsbeispiel. Hierbei zeigen:

### Kurzbeschreibung der Zeichnungen

- Figuren 1 - 4: Eine schematische Darstellung des Aufbaus der erfindungsgemäßen Seitengassack-Einheit und deren Funktionsprinzip bei einem Seitenaufprall,
- Figuren 5a und 5b: eine schematische Darstellung eines geeigneten Seitengassacks,
- Figur 6: die Darstellung einer Ventilationsöffnung und eines diese Ventilationsöffnung abdeckenden Gewebelappen und
- Figuren 7a und 7b: eine zweite Ausführungsform eines geeigneten Seitengassacks.

### Beschreibung bevorzugter Ausführungsformen

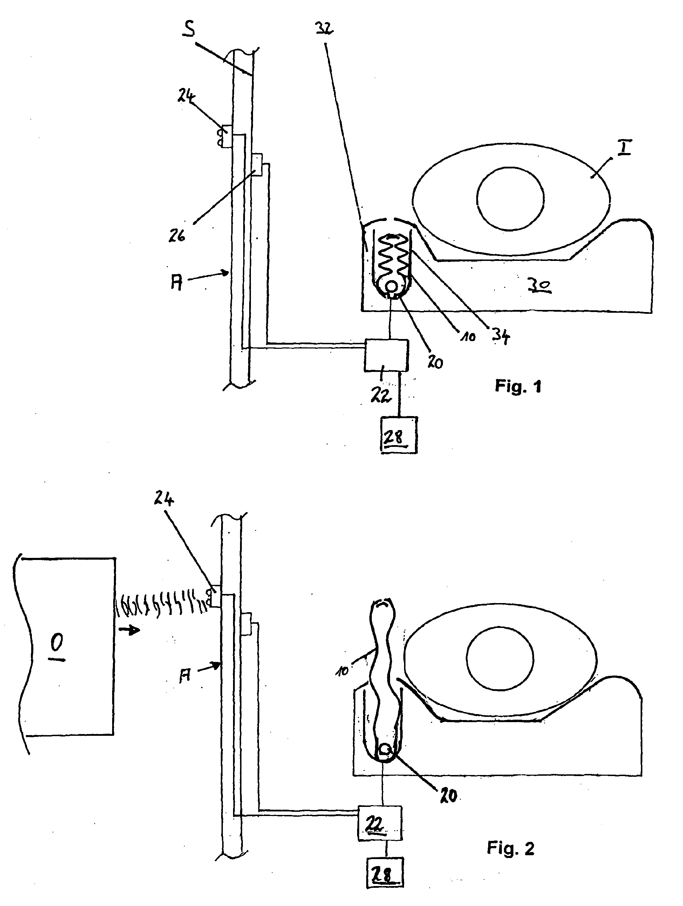

Die Figuren 1 bis 4 zeigen Aufbau und Funktionsprinzip der erfindungsgemäßen Seitengassack-Einheit. In diesem Ausführungsbeispiel ist der Seitengassack 10 in einer Seitenwange 32 des Sitzes 30 angeordnet. Es ist jedoch auch möglich, den Gassack außen an der Seitenwange des Sitzes oder in der Innenstruktur S des Fahrzeugs anzuordnen.

Der Seitengassack 10 ist zusammen mit dem Gasgenerator 20, der mit dem Gasraum des Seitengassacks verbunden ist, im Gehäuse 34 angeordnet. Der Gasgenerator 20 ist mit der Steuerungseinheit 22 verbunden, welche wiederum mit dem Näherungssensor (Pre-crash-Sensor) 24 und dem Aufprallsensor 26 verbunden ist.

Nähert sich ein Objekt O der seitlichen Außenwand A des Fahrzeugs, so wird dies vom Näherungssensor 24 registriert und die Steuerungseinheit 22 erhält ein entsprechendes Signal. Lässt sich aus Größe, Geschwindigkeit und Position des Objekts auf einen sich ereignenden Seitencrash schließen, zündet die Steuerungseinheit 22 den Gasgenerator 20. Dies geschieht, bevor das Objekt O auf die Seitenwand S des Fahrzeugs auftrifft, siehe hierzu Figur 2. Die Auslösung des Gasgenerators 20 geschieht hierbei vorzugsweise zwischen 5 und 25 ms vor Auftreffen des Objektes O.

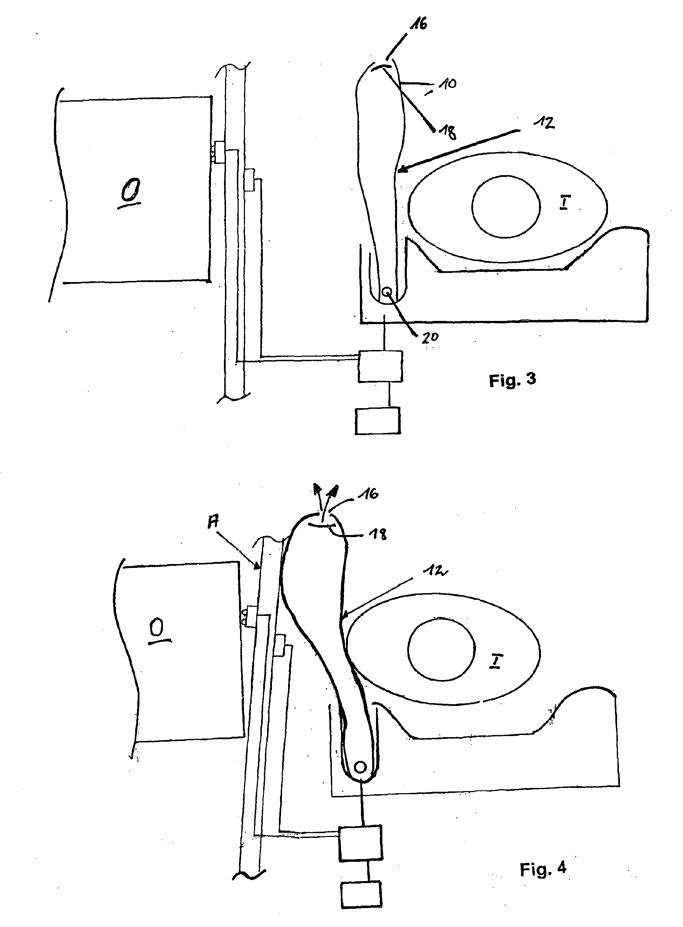

Wie man anhand Figur 3 sehen kann, hat dieses Zünden des Gasgenerators 20 vor Auftreffen des Objektes O auf die seitliche Außenwand A des Fahrzeugs die Folge, dass der Seitengassack 10 bei Auftreffen des Objektes schon vollständig entfaltet sein kann. Dies hat jedoch auch zur Folge, dass der Seitengassack 10 gegenüber einer Situation bei der der Seitengassack erst bei Aufprall des Objektes gezündet wird, über einen wesentlich längeren Zeitraum seinen Druck halten muss. Aus diesem Grund weist die Ventilationsöffnung 16 ein Verschlusselement auf, das beispielsweise in Form eines Gewebelappens 18 ausgebildet sein kann. Hierbei verschließt der Gewebelappen 18 die Ventilationsöffnung 16, so lange von außen keine Kräfte auf den Seitengassack 10 wirken. Erst wenn der Insasse I Kraft auf die Prallfläche 12 ausübt, wird die Ventilationsöffnung 16 vom Gewebelappen 18 freigegeben und der Seitengassack 10 wird weich, das heißt, er kann Energie aufnehmen. Dies geschieht kurz nachdem das Objekt O auf der seitlichen Außenwand A aufgeschlagen ist. Ein bevorzugtes Ausführungsbeispiel eines Seitengassacks 10, der ein solches Verhalten zeigt, wird später näher beschrieben.

Die Steuerungseinheit 22 ist weiterhin mit dem Aufprallsensor 26 verbunden. Dieser registriert den Aufprall eines Objektes O auf die Außenwand A des Fahrzeugs. Dieser dient in diesem Fall jedoch lediglich als backup-Sensor und führt nur dann zur Auslösung des Gasgenerators 20, wenn dies aufgrund eines Fehlers, beispielsweise eines Defekts des Näherungssensors 24, noch nicht geschehen ist.

Es ist weiterhin vorteilhaft, die Steuerungseinheit 22 wie in diesem Ausführungsbeispiel mit dem ESP- und/oder ABS-System 28 des Kraftfahrzeugs zu verbinden, das ebenfalls unfallrelevante Daten zur Verfügung stellt. Es kann insbesondere sinnvoll sein, die Steuerungseinheit 22 so zu programmieren, dass der Gasgenerator 20 bei einem Schleudern des Fahrzeugs, das auf einen bald folgenden Überschlag schließen lässt, auch dann zu zünden, wenn weder Näherungssensor 24, noch Aufprallsensor 26 ein relevantes Signal abgeben.

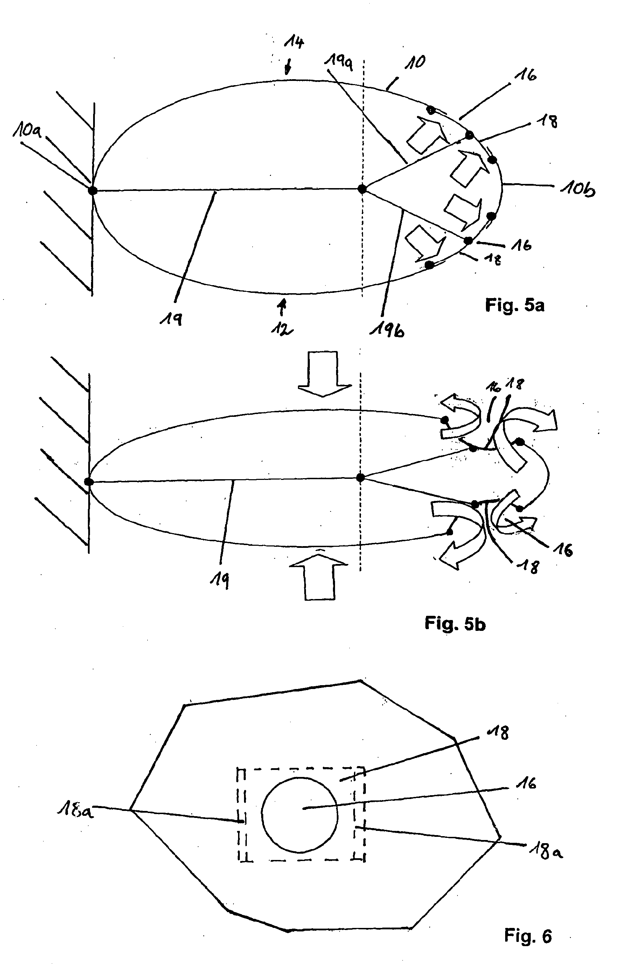

Die Figuren 5a und 5b zeigen schematisch eine bevorzugte Ausführungsform eines Seitengassacks 10, wie er in einer eben beschriebenen Seitengassack-Einheit verwendet werden kann. An seinem hinteren Ende 10a ist der Seitengassack 10 mit einem starren Strukturelement, beispielsweise dem Gehäuse (hier nicht dargestellt) verbunden. In diesem Bereich befindet sich in der Regel auch der Gasgenerator 20 (hier ebenfalls nicht dargestellt). Im Bereich des vorderen Endes 10b des Seitengassacks 10 befinden sich zwei Ventilationsöffnungen 16. Diese sind jeweils von einem als Verschlusselement dienenden Gewebelappen 18 abgedeckt (siehe hierzu Figur 6). Die Gewebelappen 18 befinden sich im Inneren des Seitengassacks 10 und sind beispielsweise über zwei Nähte 18a mit dem Seitengassack 10 verbunden.

Ohne weitere Maßnahme würden die Gewebelappen 18 durch den im Gassack herrschenden Innendruck gegen die Außenwand des Seitengassacks 10 gedrückt und würden die Ventilationsöffnungen 16, welche kleiner als die Gewebelappen 18 sind, verschließen. Dies ist zunächst auch erwünscht, allerdings sollen die Ventilationsöffnungen 16 freigegeben werden, wenn der Insasse auf die Prallfläche 12 trifft, bzw. wenn der Seitengassack 10 mit seiner Abstützfläche 14 auf die Innenstruktur des Fahrzeugs gedrückt wird (dies geschieht im wesentlichen gleichzeitig).

Um dies zu erreichen, erstreckt sich vom hinteren Ende 10a des Seitengassacks 10 bis zu den Gewebelappen 18 ein Zugelement 19, das sich hier in zwei vordere Abschnitte 19a,19b spaltet. Die Länge dieses Zugelements 19 ist so gewählt, dass in dem Fall, in dem von außen keine Kräfte auf den Seitengassack 10 ausgeübt werden (siehe hierzu Figur 5a), das Zugelement 19 im wesentlichen kräftefrei ist. Die Gewebelappen 18 verhalten sich deshalb so, als ob das Zugelement 19 nicht da wäre, d.h. sie verschließen die Ventilationsöffnungen 16.

Werden jedoch Prallfläche 12 und Abstützfläche 14 auf Grund äußerer Krafteinwirkung aufeinander zu bewegt (d.h. der Gassack wird schmaler), vergrößert sich die Längsausdehnung des Seitengassacks 10, da sich der Umfang natürlich nicht ändern kann. Hierdurch zieht das Zugelement 19 an den Gewebelappen 18, welche dadurch die Ventilationsöffnungen 16 freigeben. Das gewünschte Ziel, nämlich dass der Seitengassack 10 erst dann ventiliert wird, wenn der Insasse auf die Prallfläche trifft, wird somit erreicht. Das Zugelement dient also als Betätigungselement für die als Verschlusselemente dienenden Gewebelappen. Um die erforderliche Funktion zu gewährleisten, verläuft das Zugelement 19 im wesentlichen parallel zur Prallfläche und zur Abstützfläche. Die Gewebelappen - des kann sich hierbei auch um Lappen aus einem anderen flexiblen Material, beispielsweise Kunststoffolie, handeln, können mit reißfesten Nähten aber auch mit Reißnähten, die beim Öffnen der Ventilationsöffnungen zerstört werden, mit dem Gassackgewebe vernäht sein.

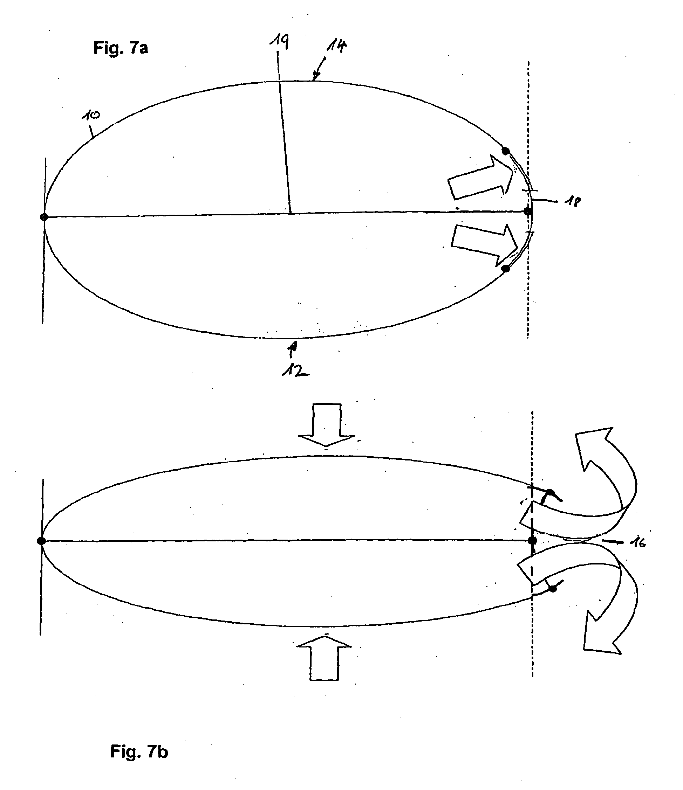

Die Figuren 7a und 7b zeigen eine Variante des eben beschriebenen Seitengassacks mit nur einer Ventilationsöffnung 16 und einem diese Ventilationsöffnung abdeckenden Gewebelappen 18. Das Funktionsprinzip ist jedoch dasselbe wie in der eben beschriebenen Ausführungsform.

Wie bereits erwähnt, kann es sich bei dem Seitengassack auch um einen sogenannten Vorhang-Gassack handeln, der sich vom Bereich des Hachholms kommend, im wesentlichen vor den Seitenscheiben und der B-Säule entfaltet.

### Bezugszeichenliste

- 10: Seitengassack
- 10a: hinteres Ende
- 10b: vorderer Abschnitt
- 12: Prallfläche
- 14: Abstützfläche
- 16: Ventilationsöffnung
- 18: Gewebelappen
- 19: Zugelement
- 19a,b: vorderes Ende
- 20: Gasgenerator
- 22: Steuerungseinheit
- 24: Näherungssensor
- 26: Aufprallsensor
- 28: ESP- und/oder ABS-System
- 30: Sitz
- 32: Seitenwange
- 34: Gehäuse
- O: Objekt
- I: Insasse
- A: Außenwand des Fahrzeugs
- S: Innenstruktur

## Patentansprüche

1. Seitengassack-Einheit für ein Kraftfahrzeug mit einem eine Prallfläche (12) aufweisenden Seitengassack (10), einem Gasgenerator (20) zum Befüllen des Seitengassacks (10), einer den Gasgenerator (20) ansteuernden Steuerungseinheit (22) und wenigstens einem ersten mit der Steuerungseinheit (22) verbundenen Sensor, wobei dieser erste Sensor ein Näherungssensor (24) ist, welcher die Relativbewegung eines Objekts (O) auf einen Bereich der seitlichen Außenwand (A) des Kraftfahrzeugs sensiert, wobei die Steuerungseinheit (22) den Gasgenerator (20) zeitlich vor dem Auftreffen eines sensierten relevanten Objekts (O) auf die seitliche Außenwand (A) betätigt,
**dadurch gekennzeichnet, dass** der Seitengassack (10) eine mittels eines Verschlusselements verschließbare Ventilationsöffnung (16) aufweist, wobei das Verschlusselement mit einem Betätigungselement verbunden ist, welches das Verschlusselement in eine die Ventilationsöffnung öffnende Stellung bringt, wenn von außen Druck auf die Prallfläche (12) ausgeübt wird.

2. Seitengassack-Einheit nach Anspruch 1, **dadurch gekennzeichnet**, **dadurch gekennzeichnet, dass** die Steuerungseinheit (22) den Gasgenerator (20) 5 bis 35 ms vor dem errechneten Aufprall betätigt.

3. Seitengassack-Einheit nach einem der vorangehenden Ansprüche, **dadurch gekennzeichnet, dass** ein zweiter mit der Steuerungseinheit verbundener Sensor (26) vorhanden ist, der den Aufprall eines Objekts auf die Außenwand des Kraftfahrzeugs sensiert, und dass die Steuerungseinheit (22) bei Aufprall eines relevanten Objekts (O) auf die Außenwand den Gasgenerator (20) betätigt, sofern dies noch nicht erfolgt ist.

4. Seitengassack-Einheit nach einem der vorangehenden Ansprüche, **dadurch gekennzeichnet, dass** das Betätigungselement ein sich durch den Gasraum im wesentlichen parallel zur Prallfläche erstreckendes Zugelement (19) ist.

5. Seitengassack-Einheit nach einem der vorangehenden Ansprüche, **dadurch gekennzeichnet, dass** das Verschlusselement ein innerhalb des Gassacks angeordneter flexibler Lappen (18) ist.

6. Seitengassack-Einheit nach einem der vorangehenden Ansprüche, **dadurch gekennzeichnet, dass** mehrere Ventilationsöffnungen (16) vorhanden sind.

7. Seitengassack-Einheit nach Anspruch 4 und Anspruch 6, **dadurch gekennzeichnet, dass** das Zugelement (19) mehrere vordere Abschnitte (10a,10b) aufweist.

8. Seitengassack-Einheit nach einem der vorangehenden Ansprüche, **dadurch gekennzeichnet, dass** die Steuerungseinheit (22) weiterhin mit dem ESP- und/oder ABS-System (28) des Kraftfahrzeugs verbunden ist.

## Claims

1. Side air bag unit for a motor vehicle with a side air bag (10) comprising an impact surface (12), with a gas generator (20) for filling the side air bag (10), a control unit (22) controlling the gas generator (20) and with at least one first sensor connected to the control unit (22), wherein this first sensor is a proximity sensor (24) that senses the relative movement of an object (O) onto an area of the lateral outer wall (A) of the motor vehicle, wherein the control unit (22) activates the gas generator (20) in time before the striking of a sensed, relevant object (O) on the lateral outer wall (A),
**characterized in that** the side air bag (10) comprises a ventilation opening (16) that can be closed by a closure element, wherein the closure element is connected to an activation element that brings the closure element into a position that opens the ventilation opening when pressure is exerted from the outside onto the impact surface (12).

2. The side air bag unit according to claim 1, **characterized in that** the control unit (22) activates the gas generator (20) 5 to 35 ms before the calculated impact.

3. The side air bag unit according to one of the previous claims, **characterized in that** a second sensor (26) connected to the control unit is present that senses the impact of an object onto the outer wall of the motor vehicle, and that the control unit (22) activates the gas generator (20) upon an impact of a relevant object (O) on the outer wall in as far as this has not yet taken place.

4. The side air bag unit according to one of the previous claims, **characterized in that** the activation element is a traction element (19) extending through the gas chamber substantially parallel to the impact surface.

5. The side air bag unit according to one of the previous claims, **characterized in that** the closure element is a flexible flap (18) arranged inside the air bag.

6. The side air bag unit according to one of the previous claims, **characterized in that** several ventilation openings (16) are present.

7. The side air bag unit according to claim 4 and claim 6, **characterized in that** the traction element (19) comprises several front sections (10a, 10b).

8. The side air bag unit according to one of the previous claims, **characterized in that** the control unit (22) is furthermore connected to the ESP and/or ABS system (28) of the motor vehicle.

## Revendications

1. Module de coussin gonflable latéral pour un véhicule automobile comprenant un coussin gonflable latéral (10) présentant une surface d'impact (12), un générateur de gaz (20) pour remplir le coussin gonflable latéral (10), une unité de commande (22) commandant le générateur de gaz (20) et au moins un premier capteur raccordé à l'unité de commande (22), dans lequel ce premier capteur est un capteur de proximité (24), qui détecte le mouvement relatif d'un objet (O) vers une zone de la paroi extérieure latérale (A) du véhicule automobile, dans lequel l'unité de commande (22) actionne le générateur de gaz (20) temporellement avant l'impact d'un objet pertinent détecté (O) sur la paroi extérieure latérale (A),
**caractérisé en ce que** le coussin gonflable latéral (10) présente un orifice d'évent (16) pouvant être fermé au moyen d'un élément de fermeture, dans lequel l'élément de fermeture est raccordé à un élément d'actionnement qui amène l'élément de fermeture dans une position ouvrant l'orifice d'évent quand une pression est exercée de l'extérieur sur la surface d'impact (12).

2. Module de coussin gonflable latéral selon la revendication 1, **caractérisé en ce que** l'unité de commande (22) actionne le générateur de gaz (20) 5 à 35 ms avant l'impact calculé.

3. Module de coussin gonflable latéral selon l'une des revendications précédentes, **caractérisé en ce qu'**il y a un second capteur (26) raccordé à l'unité de commande, qui détecte l'impact d'un objet sur la paroi extérieure du véhicule automobile, et **en ce que** l'unité de commande (22) actionne le générateur de gaz (20) lors de l'impact d'un objet pertinent (O) sur la paroi extérieure, si cela n'a pas encore été effectué.

4. Module de coussin gonflable latéral selon l'une des revendications précédentes, **caractérisé en ce que** l'élément d'actionnement est un élément de traction (19) s'étendant à travers le compartiment à gaz essentiellement parallèlement à la surface d'impact.

5. Module de coussin gonflable latéral selon l'une des revendications précédentes, **caractérisé en ce que** l'élément de fermeture est une patte flexible (18) agencée à l'intérieur du coussin gonflable.

6. Module de coussin gonflable latéral selon l'une des revendications précédentes, **caractérisé en ce qu'**il y a plusieurs orifices d'évent (16).

7. Module de coussin gonflable latéral selon la revendication 4 et la revendication 6, **caractérisé en ce que** l'élément de traction (19) présente plusieurs sections avant (10a, 10b).

8. Module de coussin gonflable latéral selon l'une des revendications précédentes, **caractérisé en ce que** l'unité de commande (22) est en outre raccordée au système ESP et/ou au système ABS (28) du véhicule automobile.
